(19) **Europäisches Patentamt**

**European Patent Office**

**Office européen des brevets**

(11) **EP 1 076 865 B1**

(12) **EUROPEAN PATENT SPECIFICATION**

(45) Date of publication and mention
of the grant of the patent:
**18.12.2002 Bulletin 2002/51**

(51) Int Cl.⁷: **G06F 17/30**

(21) Application number: **99919367.5**

(86) International application number:
**PCT/GB99/01278**

(22) Date of filing: **23.04.1999**

(87) International publication number:
**WO 99/056227 (04.11.1999 Gazette 1999/44)**

(54) **DATABASE ACCESS TOOL**

DATENBANKZUGANGSWERKZEUG

OUTIL D'ACCES A UNE BASE DE DONNEES

(84) Designated Contracting States:
**DE FR GB**

(30) Priority: **27.04.1998 GB 9808988**
**04.09.1998 EP 98307123**

(43) Date of publication of application:
**21.02.2001 Bulletin 2001/08**

(73) Proprietor: **BRITISH TELECOMMUNICATIONS**
**public limited company**
**London EC1A 7AJ (GB)**

(72) Inventors:
• **CORLEY, Stephen, Leslie**
**Kesgrave, Ipswich Suffolk IP5 2GP (GB)**
• **FAGAN, Michael**
**Woodbridge Suffolk IP13 0PB (GB)**

(74) Representative: **Robinson, Simon Benjamin et al**
**BT Group Legal Services**
**Intellectual Property Department**
**8th Floor,Holborn Centre**
**120 Holborn**
**London EC1N 2TE (GB)**

(56) References cited:
• **"SQL STATEMENT LIBRARY LIST" IBM TECHNICAL DISCLOSURE BULLETIN, vol. 36, no. 1, 1 January 1993 (1993-01-01), pages 82-83, XP000333783 ISSN: 0018-8689**
• **"STORING QUERY OBJECTS BY TYPE IN A RELATIONAL DATABASE" IBM TECHNICAL DISCLOSURE BULLETIN, vol. 32, no. 4B, 1 September 1989 (1989-09-01), page 14 XP000067092 ISSN: 0018-8689**
• **"STORE SEARCH RESULTS FOR LATER REFERENCE" IBM TECHNICAL DISCLOSURE BULLETIN, vol. 32, no. 10B, 1 March 1990 (1990-03-01), page 210 XP000097865 ISSN: 0018-8689**
• **PATENT ABSTRACTS OF JAPAN vol. 098, no. 005, 30 April 1998 (1998-04-30) & JP 10 011339 A (HITACHI LTD), 16 January 1998 (1998-01-16) & US 5 905 983 A**

**Description**

The present invention relates to querying databases.

Databases can be very large and complex. An example is the marketing domain. This domain is characterised by very large databases containing many Gigabytes of customer related information. Many different types of users can need to query a database. In large businesses, there are usually many roles associated with accessing data. These roles include people who specify queries, those that test them, tuners who carry out optimisation and then those who execute the queries.

Queries to such databases need to be carefully structured and query languages have developed, such as Structured Query Language (SQL). The SQL language consists of a set of facilities for defining, manipulating and controlling data in a relational database. SQL, pronounced Sequel, was originally an abbreviation for Structured Query Language. SQL is essentially two languages, a data definition language (DDL), for declaring structures and integrity constraints of SQL databases, and a data manipulation language (DML), for declaring the database procedures and executable statements of a specific database application program. It is both a formal standard and an industry standard. SQL was formally "standardised" by the American National Standards Institute (ANSI) in 1986 as ANS X3.135.1986 (normally known as SQL86.) The ANSI SQL standard was fully adopted by ISO in 1987 as IS 9075:1987.

The document IBM Technical Disclosure Bulletin, vol. 36, no. 1, January 1993, pages 82-83 relates to database querying using SQL. The document discloses a library list to allow a user to maintain and use SQL statements that were previously created and saved. Otherwise, when a user creates a SQL statement, it is either lost after execution or stored separately as an individual object.

SQL remains complex and the creation of a database query for a database of any complexity is still a specialist and often time consuming activity.

According to embodiments of the present invention, there is provided:

(i) means for constructing database queries;

(ii) a query store for storing database queries;

(iii) a search tool for searching the query store against a constructed query; and

(iv) query submission means for selecting between a constructed query and a query located against it by the search tool, and for submitting the selected query to a database.

Corporate databases are continually increasing in size and complexity. Over a period of time many queries will be submitted to these databases often repeating what was asked previously. Each query that is created incorporates implicitly some knowledge which could be useful for future similar queries. It has been recognised in making the present invention that it is possible to make this knowledge widely available across a community of users, for instance across a company.

Embodiments of the present invention make it possible not only to exploit a corporate database query knowledge but also to control queries submitted to large data repositories. That is, the combination of the query store and the means for constructing database queries allows structure to be imposed on new queries as well as allowing reuse of previous queries.

Advantageously, the query store and search tool use case based reasoning (CBR) principles and the means for constructing database queries does so to create a query as a case. This can be used to impose structure to be imposed on new queries.

CBR is a known technique which uses previous cases of problems and their solutions to solve new problems. A relevant publication is "Case-Based Reasoning: Experiences, Lessons and Future Directions" edited by D Leake and published in 1996 by AAAI Press, Menlo Park.

Embodiments of the present invention are particularly intended for use with structured query languages such as SQL. Intelligent query management according to embodiments of the present invention can then support a wide range of users with varying skill levels, from the complete SQL novice to the SQL expert, and can do it efficiently and effectively. Using a case-based approach, consistent and best practices can be encouraged across the organisation. Not only can the system itself improve over time as new cases are added but also the users' skill levels will increase due to inherent 'training' characteristics of the CBR systems. Furthermore, because experience is being captured the organisation will tend to be less vulnerable to the skill-loss effects of staff turnover.

From a technical viewpoint, CBR has also been found particularly appropriate. SQL has a well-defined and reasonably limited basic structure. This structure can be easily mapped into a case structure. For a target user base such as marketing, the requirements are often in the form of free-text. The natural language and text matching capabilities commonly found in CBR packages are therefore extremely useful.

In addition to storing a query, the results of the query can be stored. Preferably, therefore, embodiments of the present invention further provide a query results store and means for searching it. If a newly constructed query is identical or similar to a query already stored in the query store, then it may be that existing results can be used and neither the new query nor the stored query need be submitted. This saves precious central processing time in the database (Of course, if the stored results are too old then it may still be necessary for one of the queries to be selected and submitted in order to get fresh results). Preferably, the query store is provided in a cache.

A query construction tool will now be described as an embodiment of the present invention, by way of example only, with reference to the following figures, in which:

Figure 1 shows schematically the context in which the query construction tool sits in use;

Figure 2 shows the components of the query construction tool of Figure 1;

Figure 3 shows a flow chart of the overall process provided by the query construction tool; and

Figures 4, 5 and 6 show examples of user interface states presented to a user in use of the query construction tool.

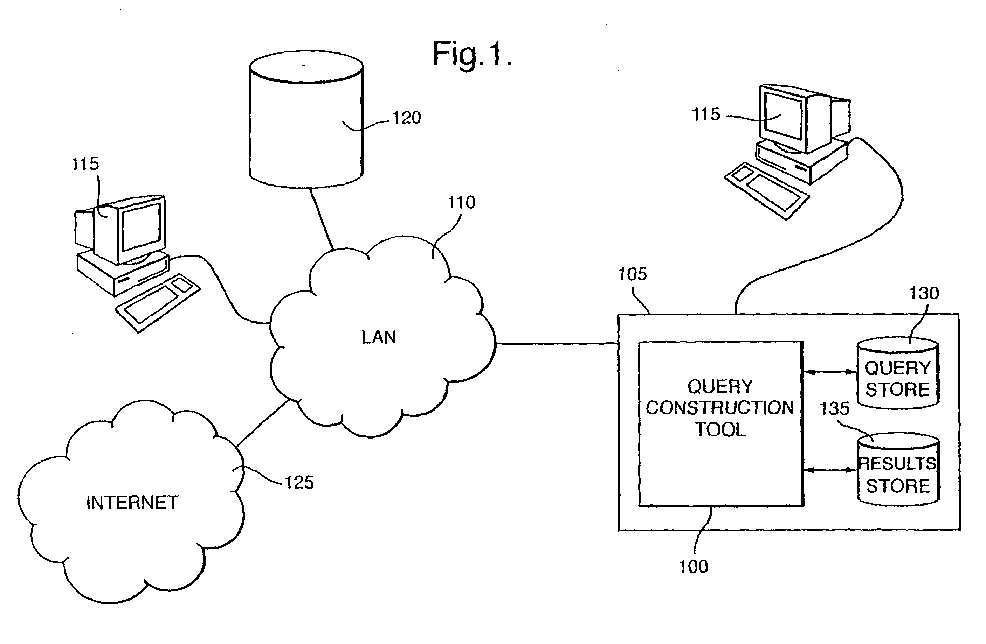

Referring to Figure 1, the query construction tool 100 can be installed on processing capacity on any platform capable of supporting it. In this embodiment, the tool 100 is installed on a server 105 connected to a local area network (LAN) 110. Users have access from client workstations 115 which may be personal computers or may for instance primarily provide processing and interface capacity for running software processes normally installed elsewhere.

In order to support the tool 100, it is necessary to install an environment on the server 105 which supports case-based reasoning. An environment which was found particularly suited was ART*Enterprise provided by Brightware Inc. Information on this environment can be obtained from the Brightware Inc. Website on the Internet located at "http://www.Brightware.com/www_home.html". The environment was chosen because of its flexible CBR facilities integrated seamlessly with rule based and object oriented capabilities. Another important feature was its ability to create case-bases from existing data sources in various formats including Oracle, Dbase4, Excel and Access. The environment also provides user interface construction facilities which allow demonstrations to be built quickly.

Other CBR environments could however be used in place of ART*Enterprise, such as Inference. Inference however is not particularly well-suited. Inference is structured more for a "Help Desk " scenario and would require a lot of questions to be answered automatically, within the tool itself, in order to be useful. Also, Inference does not support direct access to existing Oracle data sources.

The server 105 is connected via the LAN 110 to the Internet 125 and can therefore be accessed by users over the Internet. Otherwise, users can use a LAN connection or a local connection to the server 105. The user's workstation 115 needs to be able to support an ART*Enterprise client and the processing capability of at least a 486 processor is probably required for reasonable performance.

A database 120 which the tool 100 is used to submit queries to may be remote to the server 105, for instance accessible via the LAN 110, or could be local to the server 105, even for instance actually installed on the server 105.

The tool 100 comprises data as well as processing logic, the data being stored in a query store 130 and a results store 135. These stores may be external to the tool 100 or built into it. Such choices are well known to the person skilled in the art and are not further discussed herein.

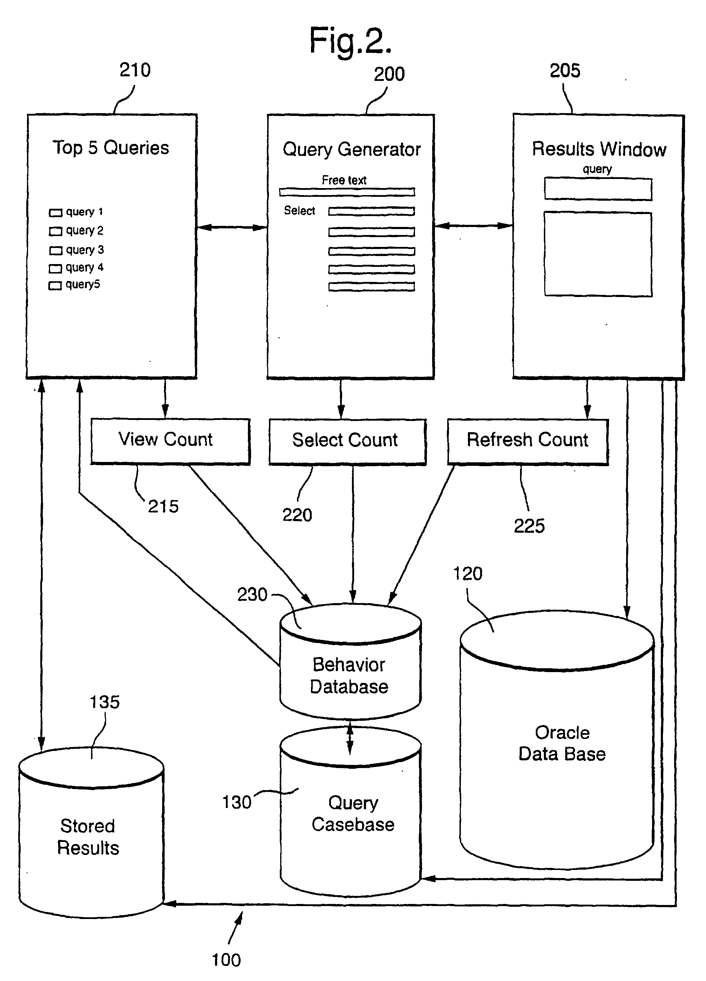

Referring to Figure 2, in the same way it is not necessary that the database 120 to be queried should be sited as shown in Figure 1. As in distributed environments generally, it does not necessarily matter to a great extent where data is stored, as long as there is capacity and access and it may be preferable to site the database 120 to be queried on the server 105, together with the query construction tool 100.

The primary functional blocks of the query construction tool 100 are a query generator 200, results presentation 205 and management information processing 210. In support of the management information processing 210, there is also provided a behaviour database 230 which maintains count information with respect to queries in the query store 130.

**Overview Of CBR-Based Querying Process.**

In general, a user can use the query generator 200 to construct a new query and submit it to the query casebase 130 as a "case" in CBR terms. If there are similar queries already in the casebase 130, they will be returned to the user workstation 115 where the user can select either to use their constructed query or an existing query. The selected query is then submitted to the main database 120. Results are returned to the user workstation 115 via the results presentation capability 205.

Alternatively, where there was an existing query, there may already be results stored in the results store 135. The user may choose not to submit either their constructed query or the existing query but just to view the stored results.

The user can start from nothing or use an existing query as the basis for describing the requirements for a new query. Once the user is happy with the description of a query they have constructed, then a case-based search of the casebase 130 is used to find existing queries which may meet their requirements. Any of the returned queries can be selected and browsed. If the results for a particular query exist they will have been stored in the results database 135 and the user may view them immediately. Alternatively the user may re-submit that query with or without modification. If a new query is sufficiently different from those stored in the past then it is added automatically to the casebase 130, whether it was constructed entirely from scratch or is an amended version of an existing query.

The count information maintained by the management information processing capability 210 in the behaviour database 230 can later be used to review usage patterns with respect to the query database 130 and the stored results database 135. In particular, there are three counts, these being "select" which increments when a query in the case base 130 is selected, "view" which is incremented when results stored in the stored results database 135 are accessed and "refresh" which is incremented when stored results in the stored results database 135 are updated.

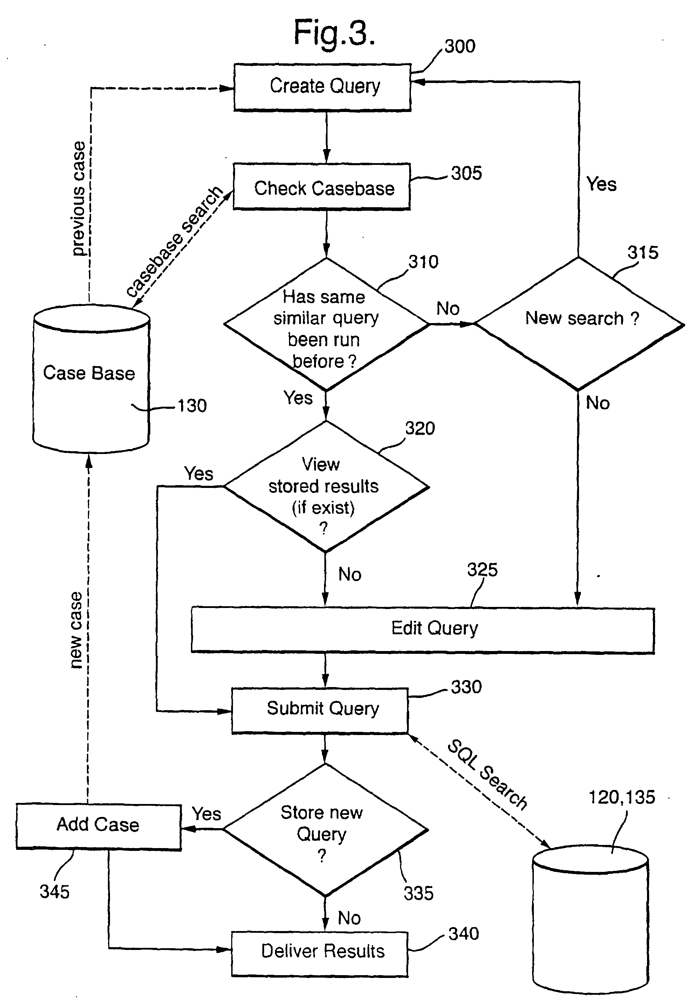

Referring to Figure 3, the querying process may be as follows:

**STEP 300:** using the query generator 200, the user enters text description and/or any known SQL code to relevant fields of a query generator window to construct a query to present to the system. The entries made by the user constitute a case which can be searched against for matches in the casebase database 130. The tool can also construct a standard format SQL query to submit to the main database 120 from the entries made by the user simply by building the SQL query from the appropriate entries.

**STEP 305:** a case-based search is done against the presented query in the query casebase 130 and the most closely matching queries stored in the casebase 130 are returned.

**STEP 310:** queries stored in the casebase 130 carry an indicator in a "RESULTS-EXIST" field where the query has previously been run and there are results in the results database 135. At **STEP 310**, a check is made for each closely matching query which has been returned from the casebase 130 at **STEP 305** as to whether such results are already stored.

**STEP 315:** it may be that no closely matching queries were returned at **STEP 305**. In this case the user may want to start again, particularly if they are inexperienced and need to run an existing query or need to have an existing query to modify so as to create a new query. The user is therefore offered the chance to start again at **STEP 300**, in which case the inexperienced user will probably try again to construct a new query that will bring an existing query at **STEP 305**. However, the experienced user may opt to proceed with the query they created at **STEP 300** or to base the query on a less closely matching query or even a dissimilar query found at **STEP 305**. This user will then be transferred to **STEP 325** below and offered the opportunity to edit their query before submission to the main database 120.

**STEP 320:** if results were located at **STEP 310,** being already stored for a closely matching query, the user is offered the opportunity to have them downloaded.

**STEP 330:** if the user selects to view the existing results, the closely matching query is submitted to the stored results database 135 and the results are downloaded to the user.

**STEP 325:** if the user selects not to view existing results at **STEP 320** for the closely matching query, the user is offered an opportunity to edit the closely matching query before moving to **STEP 330**, this time to submit the query to the main database 120. (If the user has not edited the closely matching query, this will simply have the effect of updating the search results for that query.)

**STEP 335:** any query which has been submitted to the main database 120 is reviewed in case it constitutes a new query. This is taken to be the case whenever the query submitted has less than a certain similarity threshold with any stored query in the casebase 130. This may be the situation for instance where the user has edited a closely matching query before submission to the main database 120.

**STEP 345:** new queries are automatically loaded to the casebase 130.

**STEP 340:** results from **STEP 330** are returned to the user.

It can be seen from STEP 330 above that submission of a query to the stored results database 135 and the main database 120 can be treated similarly. In each case, the query being submitted is a SQL query. It is convenient that the stored results database 135 is located with the main database, simply being partitioned therefrom. That is, the stored results database 135 is built in table format and embedded in the main database 120.

Referring to Figures 2 and 3, it has been found convenient that, once the user has defined a query for submission to the main database 120, a results window 205 is presented to the user and the query is submitted directly to the main database 120 from the results window 205.

**Other Capabilities**

In addition to the basic capabilities outlined above the following are provided:

- The user can choose to view a list of the five most frequently used queries. The user can select one of these to run directly or to use as the basis of a new query,
- The user can be presented with meta-data associated with an existing query. Meta-data is a known term for information associated with data, other than the data itself. The meta-data in this case includes for instance the original author, the date, query execution time, whether the results exist and if so, an identifier and size,
- The user has the option to run a subsequent query on the results returned or previously stored,
- The user has the option of updating the stored results database 135 with the results of rerunning an existing query.

**Case Structure, Matching and Retrieval**

A major part of embodiments of the present invention is the definition of a case based on a SQL query. To define each case for the case base 130, a basic SQL statement is broken down by it's structure, and parts of that structure are then used as fields for a case in the case base 130.

CBR matches cases against each other and different weights can be given to matches between different fields in a case. For instance, a field might be the "from clause" of a SQL query which determines which databases, or sections of databases, are to be searched. This might be given particularly high weighting so that a SQL query will only be selected as a similar query and offered to the user if it looks at the same tables of a database.

The structure of the cases is described in Table 1 below.

Table 1.

| Case Structure | | | |
|---|---|---|---|
| Feature | Match Type | Match Weight | Mis-match Weight |
| NOTES | Word | 20 | 0 |
| SELECT-CLAUSE | Word | 25 | 0 |
| FROM-CLAUSE | Character | 45 | 0 |
| WHERE-CLAUSE | Character | 10 | 0 |
| GROUP-BY-CLAUSE | Word | 5 | 0 |
| HAVING-CLAUSE | Word | 1 | 0 |
| ORDER-BY-CLAUSE | Word | 1 | 0 |
| *ROWS_SELECTED* | # | # | # |
| *QUERY_TIME* | # | # | # |
| *CREATOR* | # | # | # |
| *RESULTS_EXIST* | # | # | # |
| *RESULTS_REF* | # | # | # |
| *DATE_CREATED* | # | # | # |

The NOTES feature is free text describing the data that should be returned from the query to be written. The main features are then those that correspond to the structure of a simple SQL query. The items in italics are the meta-data. This is additional information which may have an impact on the user's final choice but is not part of the casebase index. In addition each case has a unique identifier (not shown in the table).

The choice of match types and weights is optional. In the example of Table 1, they are based on knowledge about the domain of SQL querying and initial experimentation. For example, the most important feature is the FROM-CLAUSE because this determines the specific tables from which the data will be retrieved. It will be of "character" type because of the manner of identifying tables in the database 120 to be searched. In this particular example, queries are not penalised for not matching against a feature value and therefore all mis-match weights are zero.

An example case is as follows:

Table 2.

| Example Case | |
|---|---|
| **Feature** | **Value** |
| NOTES | Top ten business for ISDN2 |
| SELECT-CLAUSE | distinct (a.local_number), tally, direction, position, s.site_number, business_name |
| FROM-CLAUSE | CCBA_ISDN_2 a, sites s |
| WHERE-CLAUSE | a.site_number = s.site_number and position $\Leftarrow$ 10 |
| GROUP-BY-CLAUSE | (empty) |
| HAVING-CLAUSE | (empty) |
| ORDER-BY | (empty) |
| ROWS-SELECTED | 10 |
| QUERY-TIME | 00:00:03 |
| CREATOR | RTS |
| RESULTS-EXIST | YES |
| RESULTS-REF | TOPTENPROD |
| DATE-CREATED | 2-Feb 98 16:00 |

Table 2 shows the fields of a SQL query to locate the top ten communications sites generating traffic on ISDN2 lines (Integrated Services Digital Network lines based on the capacity of two conventional speech telephony lines).

The matching process between queries is a straight forward use of CBR and applies the in-built capabilities of the environment as described in ART*Enterprise Brightware Inc, 1996, *ARTScript Programming Guide 3, Rules & CBR.* Each feature is compared and scored according to its type: *string; word;* and *character.* These are combined taking into account the weights to give an overall feature score, or similarity score, for the case. A threshold of 0.4 is set above which a case must score to be retrieved. (The feature score can also be used to determine automatically when a query is sufficiently different from stored queries to be added to the casebase database 130. In these circumstances, a score of less than 0.4 means that the query will be added to the casebase database 130.) The maximum number of cases retrieved is set to 10. These values are arbitrary but have been found to be convenient. Other values may be preferred for instance where an embodiment of the invention is applied to quite a different domain or for a different purpose.

The feature score for numeral matching is generated in a known manner, as follows:

$$feature - score_{f,i} = mw_{f,i} - \frac{\left| cv_{f,i} - pcv_{f,i} \right|}{mdev_{f,i}} \left( mw_{f,i} - mmw_{f,i} \right).$$

where:

$mw_{f,i}$ is the match weight of feature *f* for case *i*;
$mmw_{f,i}$ is the mismatch weight of feature *f* for case *i*;
$mdev_{f,i}$ is the match deviation of feature *f* of case *i*;
$cv_{f,i}$ is the numeric value for feature *f* of case *i*; and

$pcv_{f,i}$ is the numeric value for feature $f$ of the presented case.

The feature score for text matching is generated in known manner. The formula is as follows:

$$feature\text{-}score_{fi} = mmw_{fi} + \frac{msf_{f,i}}{tsf_f}(mw_{f,i}\text{-}mmw_{f,i})$$

where:

$mmw_{f,i}$ is the match weight of feature $f$ for case $i$;
$mw_{f,i}$ is the mismatch weight of feature $f$ for case $i$; and
$msf_{f,i}$ is the number of matching sub-features of feature $f$ for case $i$.

Domain specific aliases (i.e. different words which have the same or similar meaning) may be taken into account during this calculation. The result is that the quality of the text matching is improved because the algorithm matches on meaning (semantics) rather than raw text (syntax). Typically, this is achieved by replacing each word by a symbol as determined by reference to a thesaurus that maps different words having the same meaning for a given domain to the same symbol. Data storage can be allocated to provide means for storing the thesaurus. The thesaurus functionality may be provided by a knowledge base (not shown) which includes domain specific knowledge and means for mapping that knowledge to non-domain specific knowledge.

A number of data areas are defined for embodiments of the present invention:

- Database 120
    The location of the data on which the queries will be run
- Query Casebase 130
    The casebase containing the past queries
- Stored Results 135
    The data sets returned by the past queries
- Behaviour Database 230

The functions of most of these have been discussed above. The behaviour database 230 however stores the values of counters which record the usage of each case. The counters are; (i) 'Select', which increments when a query is selected, (ii) "View", which increments when the stored results are accessed and, (iii) 'Refresh', which increments if stored results are updated.

Each count can be provided as a field associated with a result in the results database 135 or with a query in the case base 130. Each time a count is incremented, it is incremented by updating the count field. Management information can then be presented by searching the results database 135 and/or the query case base 130 to locate results or queries with count fields putting them above a selected threshold, such as in the top five or top ten of the whole database 135, 130 in each case. However, as shown, the counts are maintained in an additional data store, the behaviour database 230, where queries or results can be associated with their relevant count by their position in an array or by being allocated respective identifiers against which the counts are maintained.

One way of designing the behaviour database 230 is to structure the count data as cases. It can then be searched by running a dummy case in which all the counters are set to maximum and searching for a selected number of most closely matching cases, such as the "Top 5" cases. That is, a case match is done just on the count fields.

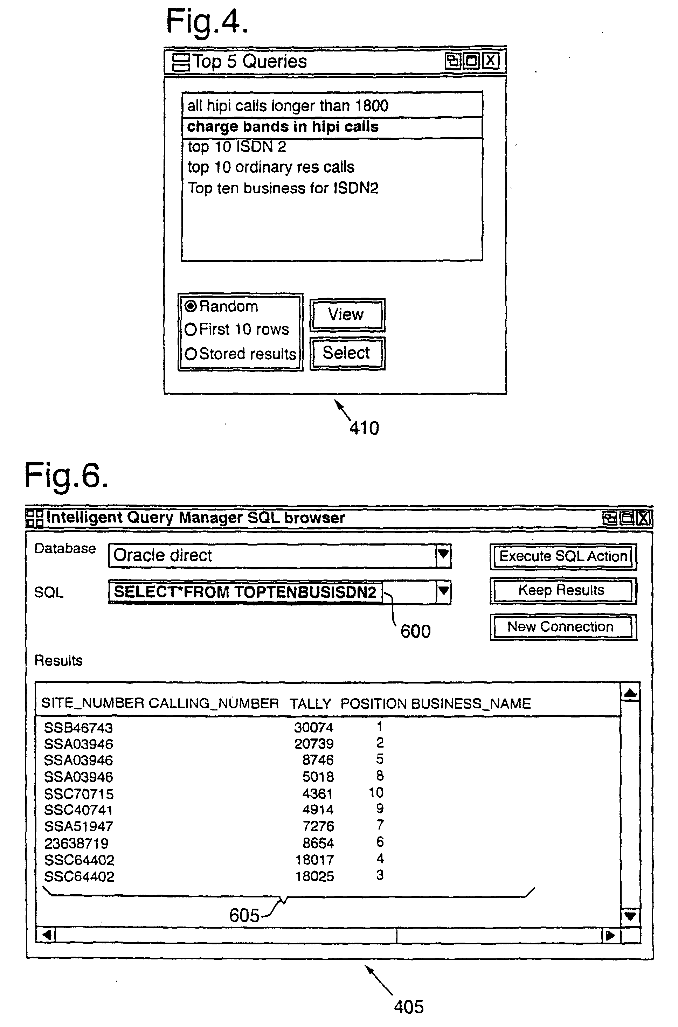

Figures 4 to 6 show the three main windows presented to the user in various statuses of the casebased query construction tool 100.

Referring to Figure 4, the Top 5 Queries window 410 shows the most 'popular' queries based on their usage as defined by the values of the counters of the behaviour database 230. This window is one of several windows that might be presented to the user for accessing the behaviour database 230. The user can select a query listed on the Top 5 Queries window 210 to submit directly to the main database 120, to use as a presentation case (optionally modified) for a CBR search, or to modify and submit i.e. as input to STEP 300.

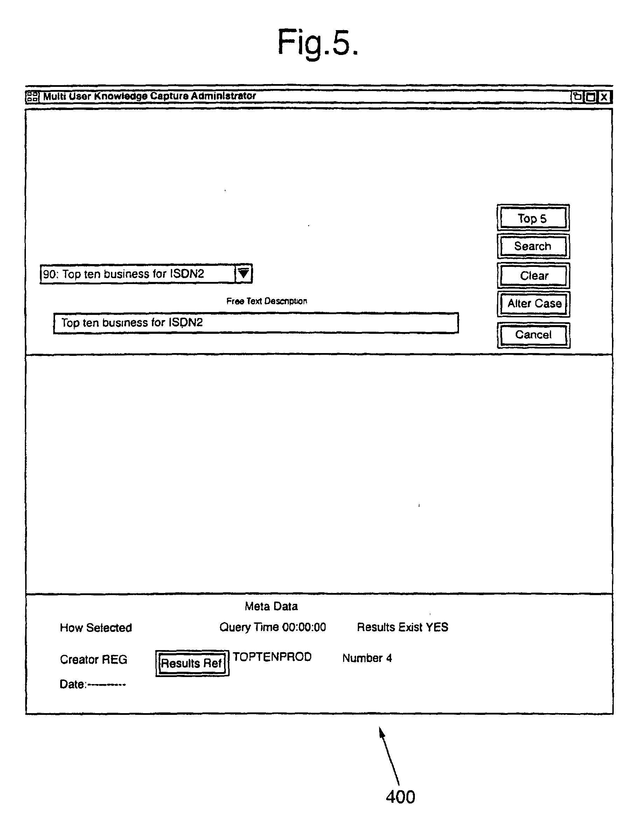

Referring to Figure 5, the Query Generator window 400 is the main search and construction window. The user enters descriptive values into the fields (not shown) associated with each feature. At any time the user can present the query to the casebase 130 or send the query for submission to the main database 120. Buttons present on the window are;

- TOP 5: the function attached to this button causes the Top 5 window to appear

- SEARCH: this function invokes a casebase match and retrieval. The results of the search appear in the drop-down-list-box at the top of the window.

- CLEAR: clears the entries in the fields

- ALTER CASE: allows the user to modify the contents of a case

- CANCEL: closes the window

- SUBMIT: executes the SQL in the window, after checking the validity of the code. If the SQL submitted is sufficiently dissimilar from any contained within the casebase 130 then a new case is created automatically without the user knowing. The returned results are presented in the Results window.

Referring to Figure 6, the Results window 405 displays the final SQL 600 as generated from the Query Generator window and the returned results 605. The SQL can be modified and resubmitted directly from this window 405 allowing a follow-up query on previously returned results.

(A window which is not shown here is the database login window. This is of standard type however.)

In embodiments of the present invention in use, the user may enter values for as many case features as required. If just the notes feature is specified then queries can be found without any knowledge of SQL or the database schema. This allows complete SQL novices to retrieve queries. Of course, it may be that unless an exact match is found then such a complete novice will not be able to proceed because modifications to the query would be required. Whether this is a problem depends upon the circumstances. It could be imagined that the novices would deal with straightforward queries and pass those that needed changes to more senior users.

Improvements which the person skilled in the art might wish to make for a particular use of embodiments of the present invention are as follows:

- Tuning of the choice of feature match types and weights;

- Inclusion of a full domain specific thesaurus to cope with aliases within and across databases;

- Development of use of the meta data, for example, prediction of query times or deriving a 'cost' metric for the query. Such development is discussed in a paper by Liu, L., Pu, C. 1997, entitled *A Metadata Based Approach to Improving Query Responsiveness,* (http://computer.org/conferen/proceed/meta97/papers/lliu/lingliufull.html);

- Techniques for supporting time/resource constrained queries;

- Long term management of the casebase, including policies for the creation, deletion and indexing of cases;

- Making use of other types of meta-data such as information in the schema of the database being queried;

- Making more use of the behaviour data, for example, to monitor user skill/familiarity levels for intelligent allocation of query requests, or to detect trends across users at different times of the year to plan resources optimally; and

- Acceptable ways of obtaining user feedback on how useful the query was. It is known that users become frustrated when continually forced to enter supplementary information not directly relevant to achieving their task at hand.

## Claims

1. A database access tool comprising:

   i) means for constructing database queries;

   ii) a query store for storing database queries;

   iii) a search tool for searching the query store against a constructed query; and

iv) query submission means for selecting between a constructed query and a query located against it by the search tool, and for submitting the selected query to a database.

**2.** A tool according to Claim 1 wherein the means for constructing database queries comprises user input means for loading data to at least one data field in a database query and the search tool comprises means to calculate a similarity factor between data fields in database queries stored in the query store and at least one data field in a newly constructed database query.

**3.** A tool according to Claim 2 wherein the query store and the search tool are constructed according to use of case based reasoning (CBR) and the means for constructing database queries does so to construct a query as a case.

**4.** A tool according to Claims 2 or 3 wherein management information data is collected in use of the tool to submit queries to the database, the tool further comprising means for collecting said management information, structuring the management information for a respective query in the same manner as a database query constructed by the tool and loading the structured management information to a management information data store, said management information data store being searchable by means of the search tool.

**5.** A database access tool according to any preceding claim, further comprising a data store for storing results associated with previous database queries and wherein the search tool is further operable, when a located query is identical or similar to the constructed query, to return the results stored in the data store that are associated with the located query.

**6.** A method of accessing a database, the method comprising the steps of:

(i) constructing a database query;
(ii) searching a query store containing database queries against the constructed query;
(iii) selecting between the constructed query and a query located against it during the searching step; and
(iv) submitting the selected query to the database.

**7.** A method according to claim 6, where the step of constructing a database query comprises a user loading data to at least one data field in a database query, and where the step of searching comprises calculating a similarity factor between data fields in database queries stored in the query store and at least one data field in the newly constructed database query.

**8.** A method according to claim 7, where the query store is constructed according to the use of case based reasoning (CBR), the step of constructing a query comprising creating a query as a case using CBR and the step of searching comprising using CBR

**9.** A method according to claim 7 or 8, further comprising collecting management information data for a query submitted to the database, structuring the management information in the same manner as the respective query, and loading the structured management information to a searchable management information data store.

**10.** A method according to any of claims 5 to 9, further comprising: in the event that the located query is identical or similar to the constructed query, returning results stored previously in a data store, the results being associated with the located query.

**Patentansprüche**

**1.** Datenbank-Zugriffswerkzeug, das umfaßt:

i) Mittel zum Konstruieren von Datenbank-Abfragen;
ii) einen Abfragenspeicher zum Speichern von Datenbankabfragen;
iii) ein Suchwerkzeug zum Durchsuchen des Abfragenspeichers unter Gegenüberstellung einer konstruierten Abfrage; und
iv) Abfragenübergabemittel, die zwischen einer konstruierten Abfrage und einer Abfrage, die ihr durch das Suchwerkzeug gegenübergestellt wird, auswählen und die ausgewählte Abfrage an eine Datenbank übergeben.

**2.** Werkzeug nach Anspruch 1, bei dem die Mittel zum Konstruieren von Datenbankabfragen Anwendereingabemittel zum Laden von Daten in wenigstens ein Datenfeld in einer Datenbankabfrage umfassen und das Suchwerkzeug Mittel umfaßt, die einen Ähnlichkeitsfaktor zwischen Datenfeldern in in dem Abfragenspeicher gespeicherten Datenbankabfragen und wenigstens einem Datenfeld in einer neu konstruierten Datenbankabfrage enthalten.

**3.** Werkzeug nach Anspruch 2, bei dem der Abfragenspeicher und das Suchwerkzeug in Übereinstimmung mit der Anwendung einer fallbasierten Schlußfolgerung (CBR = Case Based Reasoning) konstruiert sind und die Mittel zum Konstruieren von Datenbankabfragen in der Weise arbeiten, daß sie eine Abfrage als einen Fall konstruieren.

**4.** Werkzeug nach Anspruch 2 oder 3, bei dem bei Verwendung des Werkzeugs Managementinformations-Daten gesammelt werden, um Abfragen an die Datenbank zu übergeben, wobei das Werkzeug ferner Mittel zum Sammeln der Managementinformationen, zum Strukurieren der Managementinformationen für eine entsprechende Abfrage in derselben Weise wie eine durch das Werkzeug konstruierte Datenbankabfrage und zum Laden der strukturierten Managementinformationen in einen Managementinformation-Datenspeicher umfaßt, wobei der Managementinformation-Datenspeicher von dem Suchwerkzeug durchsucht werden kann.

**5.** Datenbank-Zugriffswerkzeug nach einem vorhergehenden Anspruch, das ferner einen Datenspeicher zum Speichern von Ergebnissen, die früheren Datenbankabfragen zugeordnet sind, umfaßt und bei dem das Suchwerkzeug ferner in dem Fall, in dem eine lokalisierte Abfrage mit der konstruierten Abfrage übereinstimmt oder dieser ähnlich ist, so betreibbar ist, daß es die in dem Datenspeicher gespeicherten Ergebnisse, die der lokalisierten Abfrage zugeordnet sind, zurückleitet.

**6.** Verfahren zum Zugreifen auf eine Datenbank, das die folgenden Schritte umfaßt:

(i) Konstruieren einer Datenbankabfrage;
(ii) Durchsuchen eines Abfragenspeichers, der Datenbankabfragen enthält, unter Gegenüberstellung der konstruierten Abfrage;
(iii) Wählen zwischen der konstruierten Abfrage und einer ihr gegenübergestellten Abfrage während des Suchschrittes; und
(iv) Übergeben der gewählten Abfrage an die Datenbank.

**7.** Verfahren nach Anspruch 6, bei dem der Schritt des Konstruierens einer Datenbankabfrage einen Anwender umfaßt, der Daten in wenigstens ein Datenfeld in einer Datenbankabfrage lädt, und bei dem der Suchschritt das Berechnen eines Ähnlichkeitsfaktors zwischen Datenfeldern in in dem Abfragenspeicher gespeicherten Datenbankabfragen und wenigstens einem Datenfeld in der neu konstruierten Datenbankabfrage umfaßt.

**8.** Verfahren nach Anspruch 7, bei dem der Abfragenspeicher in Übereinstimmung mit der Anwendung einer fallbasierten Schlußfolgerung (CBR = Case Based Reasoning) konstruiert ist, wobei der Schritt des Konstruierens einer Abfrage das Erzeugen einer Abfrage als einen Fall unter Anwendung der CBR umfaßt und der Suchschritt die Anwendung der CBR umfaßt.

**9.** Verfahren nach Anspruch 7 oder 8, das ferner umfaßt: Sammeln von Managementinformations-Daten für eine an die Datenbank übergebene Abfrage, Strukturieren der Managementinformationen in der gleichen Weise wie die entsprechende Abfrage und Laden der strukturierten Managementinformationen in einem durchsuchbaren Managementinformation-Datenspeicher.

**10.** Verfahren nach einem der Ansprüche 5 bis 9, das ferner umfaßt: falls die lokalisierte Abfrage mit der konstruierten Abfrage übereinstimmt oder zu dieser ähnlich ist, Zurückleiten von in einem Datenspeicher vorher gespeicherten Ergebnissen, die der lokalisierten Abfrage zugeordnet sind.

**Revendications**

**1.** Outil d'accès à une base de données comprenant :

i) un moyen destiné à construire des requêtes en base de données,
ii) une mémoire de requêtes destinée à mémoriser des requêtes en base de données,
iii) un outil de recherche destiné à effectuer une recherche dans la mémoire de requêtes vis-à-vis d'une requête construite, et

iv) un moyen de soumission de requête destiné à sélectionner entre une requête construite et une requête localisée vis-à-vis d'elle par l'outil de recherche, et à soumettre la requête sélectionnée à une base de données.

**2.** Outil selon la revendication 1, dans lequel le moyen destiné à construire des requêtes en base de données comprend un moyen d'entrée de l'utilisateur destiné à charger des données dans au moins un champ de données dans une requête de base de données et l'outil de recherche comprend un moyen pour calculer un facteur de similarité entre des champs de données dans des requêtes en base de données mémorisées dans la mémoire de requêtes, et au moins un champ de données dans une requête en base de données nouvellement construite.

**3.** Outil selon la revendication 2, dans lequel la mémoire de requêtes et l'outil de recherche sont construits conformément à une utilisation d'un raisonnement à base de cas (CBR) et le moyen destiné à construire des requêtes en base de données fait en sorte de construire une requête comme un cas.

**4.** Outil selon les revendications 2 ou 3, dans lequel des données d'informations de gestion sont recueillies au cours de l'utilisation de l'outil pour soumettre des requêtes à la base de données, l'outil comprenant en outre un moyen destiné à recueillir lesdites informations de gestion, structurer les informations de gestion pour une requête respective de la même manière qu'une requête en base de données construite par l'outil et charger les informations de gestion structurées dans une mémoire de données d'informations de gestion, ladite mémoire de données d'informations de gestion pouvant faire l'objet d'une recherche au moyen de l'outil de recherche.

**5.** Outil d'accès à une base de données selon l'une quelconque des revendications précédentes, comprenant en outre une mémoire de données destinée à mémoriser des résultats associés à des requêtes en base de données précédentes et dans lequel l'outil de recherche peut en outre être mis en oeuvre, lorsqu'une requête localisée est identique ou similaire à la requête construire, pour renvoyer les résultats mémorisés dans la mémoire de données qui sont associés à la requête localisée.

**6.** Procédé d'accès à une base de données, le procédé comprenant les étapes consistant à :

i) construire une requête en base de données,
ii) effectuer une recherche dans une mémoire de requêtes contenant des requêtes en base de données vis-à-vis d'une requête construite,
iii) sélectionner entre la requête construite et une requête localisée vis-à-vis de celle-ci durant l'étape de recherche, et
iv) soumettre la requête sélectionnée à la base de données.

**7.** Procédé selon la revendication 6, où l'étape de construction d'une requête en base de données comprend un chargement par l'utilisateur de données dans au moins un champ de données dans une requête en base de données, et où l'étape de recherche comprend le calcul d'un facteur de similarité entre des champs de données dans des requêtes en base de données mémorisées dans la mémoire de requêtes et au moins un champ de données dans la requête en base de données nouvellement construite.

**8.** Procédé selon la revendication 7, où la mémoire de requêtes est construite conformément à l'utilisation d'un raisonnement à base de cas (CBR), l'étape de construction d'une requête comprend la création d'une requête sous forme d'un cas en utilisant le raisonnement CBR, et l'étape de recherche comprenant l'utilisation d'un raisonnement CBR.

**9.** Procédé selon la revendication 7 ou 8, comprenant en outre le recueil de données d'informations de gestion pour une requête soumise à la base de données, la structuration des informations de gestion de la même manière que la requête respective, et le chargement des informations de gestion structurées dans une mémoire de données d'informations de gestion pouvant faire l'objet d'une recherche.

**10.** Procédé selon l'une quelconque des revendications 5 à 9, comprenant en outre : dans le cas où la requête localisée est identique ou similaire à la requête construite, le renvoi des résultats précédemment mémorisés dans une mémoire de données, les résultats étant associés à la requête localisée.

Fig.1.

# Fig.2.

# Fig.3.

Create Query — 300

Check Casebase — 305

Has same similar query been run before ? — 310

New search ? — 315

Case Base — 130

previous case

casebase search

View stored results (if exist) ? — 320

Edit Query — 325

new case

Submit Query — 330

SQL Search

120,135

Add Case — 345

Store new Query ? — 335

Deliver Results — 340

# Fig.4.

**Top 5 Queries**

all hipi calls longer than 1800
**charge bands in hipi calls**
top 10 ISDN 2
top 10 ordinary res calls
Top ten business for ISDN2

◉ Random
○ First 10 rows
○ Stored results

View

Select

410

# Fig.6.

**Intelligent Query Manager SQL browser**

Database: Oracle direct ▼

SQL: **SELECT*FROM TOPTENBUSISDN2** ▼

600

Execute SQL Action

Keep Results

New Connection

Results

| SITE_NUMBER | CALLING_NUMBER | TALLY | POSITION | BUSINESS_NAME |
|---|---|---|---|---|
| SSB46743 | | 30074 | 1 | |
| SSA03946 | | 20739 | 2 | |
| SSA03946 | | 8746 | 5 | |
| SSA03946 | | 5018 | 8 | |
| SSC70715 | | 4361 | 10 | |
| SSC40741 | | 4914 | 9 | |
| SSA51947 | | 7276 | 7 | |
| 23638719 | | 8654 | 6 | |
| SSC64402 | | 18017 | 4 | |
| SSC64402 | | 18025 | 3 | |

605

405

# Fig.5.

Multi User Knowledge Capture Administrator

Top 5

Search

90: Top ten business for ISDN2 ▼

Clear

Alter Case

Free Text Description

Top ten business for ISDN2

Cancel

Meta Data

How Selected      Query Time 00:00:00      Results Exist YES

Creator REG    Results Ref    TOPTENPROD      Number 4

Date:————-

400